# EUROPEAN PATENT APPLICATION

(11) **EP 4 733 271 A1**
(43) Date of publication of application: **29.04.2026**
(21) Application number: 25752303.5
(22) Date of filing: 23.01.2025
(51) Int. Cl.: C02F 1/469, B01D 61/44, B01D 61/46, B01D 61/52, C02F 103/34

(54) **MULTI-CHANNEL MEMBRANE MODULE SYSTEM FOR WASTEWATER TREATMENT AND RESOURCE CIRCULATION USING REDOX-BASED ELECTRODIALYSIS**

(30) Priority: 06.02.2024 KR 20240018470; 26.04.2024 KR 20240056322; 26.04.2024 KR 20240056327
(71) Applicant: Kongju National University Industry-University Cooperation Foundation, Gongju-si, Chungcheongnam-do 32588 (KR)
(72) Inventor: KIM, Choonsoo, Cheonan-si Chungcheongnam-do 31080 (KR); KIM, Hyunjin, Cheonan-si Chungcheongnam-do 31101 (KR)
(74) Representative: BCKIP Part mbB
(86) International application number: PCT/KR2025/001270
(87) International publication number: WO 2025/170255

(57) **Abstract**

The present invention relates to a redox-mediated electrodialysis multi-channel membrane module system for wastewater treatment and resource recycling.

The present invention discloses a redox-mediated bipolar membrane electrodialysis (RBED) process, which combines a bipolar membrane electrodialysis (BPED) process with a redox flow desalination process, the present invention is driven at a low potential via a redox reaction with a low operating potential instead of the water-splitting reaction used in conventional electrodialysis. Consequently, the system exhibits superior energy efficiency. By utilizing this redox-mediated multi-channel membrane module system, high-efficiency desalination and resource recycling are possible for wastewater generated during secondary battery manufacturing and metal recovery processes. Furthermore, the energy consumed for desalination and resource recycling can be recovered, thereby providing high energy efficiency and cost competitiveness.

## Description

### BACKGROUND OF THE INVENTION

### FIELD OF THE INVENTION

The present invention relates to a redox-mediated electrodialysis multi-channel membrane module system for wastewater treatment and resource recycling. More particularly, the present invention relates to a redox-mediated bipolar membrane electrodialysis (RBED) system that combines a bipolar membrane electrodialysis (BPED) process with a redox-mediated electrochemical desalination process. By operating at low voltage through redox reactions with lower operating potential instead of conventional water splitting in electrodialysis, the system demonstrates excellent energy efficiency. It enables highly efficient desalination and resource recycling from Na₂SO₄ wastewater generated during secondary battery manufacturing and metal recovery processes, with the capability to recover the energy used for said desalination and resource recycling.

### DESCRIPTION OF THE RELATED ART

Lithium-ion batteries are utilized as major energy sources ranging from portable batteries in IT devices such as smartphones and laptops to electric vehicles (EVs), due to their high power and high energy characteristics. With the surge in demand for environmentally friendly technologies such as electric vehicles (EVs) and energy storage systems (ESS), the demand for lithium-ion batteries is rapidly increasing.

Generally, hydrometallurgical processes are used to recover valuable metals from waste lithium-ion batteries, wherein cathode active materials from lithium batteries are leached with sulfuric acid, followed by recovery of cobalt and other metals through precipitation or solvent extraction using alkalis. This recovery process inevitably generates high-salinity wastewater containing valuable metals, and during the wastewater treatment process, wastewater containing salt components is discharged into water systems, impacting the environmental ecosystem. Current wastewater treatment technologies for recycled waste lithium batteries are developing toward separating/recovering Na₂SO₄ waste liquid through distillation, evaporation, crystallization, and separation membranes.

However, conventional treatment technologies have problems such as low recovery rates, high energy consumption, and generation of large amounts of gas.

Patent Document 1 discloses a wastewater treatment method through an electrodialysis device composed of anion exchange membranes and cation exchange membranes, and Patent Document 2 describes producing high concentrations of alkali hydroxide from neutral salts at high current efficiency through electrodialysis using bipolar membranes and cation exchange membranes.

Additionally, Patent Document 3 discloses a system for treating wastewater generated in the recycling process of waste lithium-ion batteries, recovering strong acids and strong alkalis from the wastewater, and reusing the treated water discharged from the system as process water within the system to enable zero liquid discharge treatment of the final waste liquid. In this case, an electrodialysis process using bipolar membranes is employed.

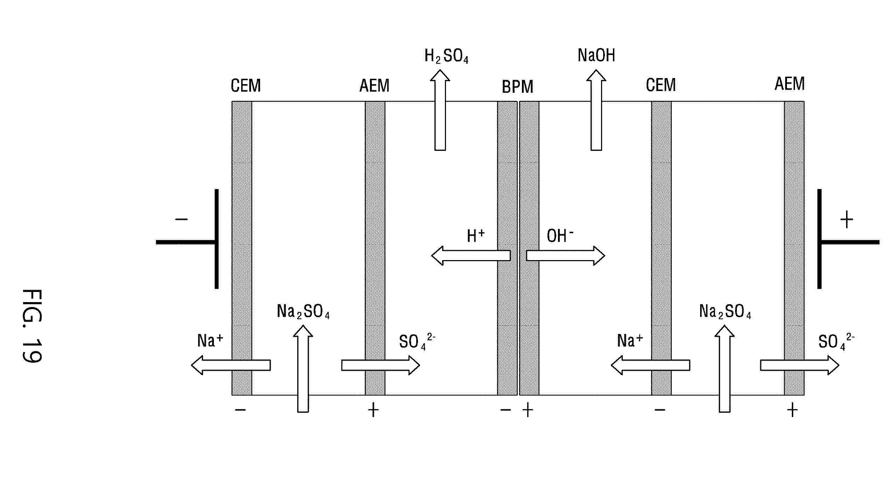

FIG. 19 shows a cell structure in which a general bipolar membrane electrodialysis (BPED) process is performed. Hydrogen ions (H⁺) and hydroxide ions (OH⁻) generated by water splitting at the bipolar membrane placed in the center can be selectively passed through adjacent cation or anion exchange membranes to be recovered as sulfuric acid (H₂SO₄) and sodium hydroxide (NaOH).

However, these electrochemical treatment technologies have the disadvantage that most processes are performed on a small scale, requiring long process times for high treatment capacity and generating large amounts of wastewater, resulting in significant environmental burden.

Furthermore, general electrodialysis process-based systems have the problem of forming various by-products near the electrodes and high energy consumption due to the use of high voltage. Therefore, although electrochemical processes can treat waste liquid without high pressure utilization at low temperatures, technical and industrial demands continue to be raised regarding high energy costs and low treatment capacity.

Moreover, difficulties in securing economic feasibility and technical challenges in channel stacking have been pointed out during scale-up for commercialization due to the stacking of expensive bipolar and ion exchange membranes.

Accordingly, the present invention was completed as a result of efforts to resolve the problems of electrochemical treatment technology by developing redox-mediated bipolar membrane electrodialysis (RBED) technology that combines a redox flow desalination process with conventional bipolar membrane electrodialysis (BPED). This technology enables energy-efficient operation at low voltage through oxidation-reduction reactions of redox materials for sodium sulfate reuse. Furthermore, by stacking inexpensive porous carbon electrodes in redox channels instead of stacking expensive bipolar membranes and ion exchange membranes, treatment capacity can be increased, confirming the possibility of scale-up for commercialization.

### [Related Art Documents]

(Patent Document 1) Korean Patent No. 1328279 (published November 14, 2013)
(Patent Document 2) Japanese Patent Publication No. 1993-070984 (published March 23, 1993)
(Patent Document 3) Korean Patent No. 2601857 (published November 16, 2023)

### SUMMARY OF THE INVENTION

The object of the present invention is to provide a redox-mediated electrodialysis multi-channel membrane module system for wastewater treatment and resource recycling generated during secondary battery manufacturing and metal recovery processes.

To achieve the above object, the present invention provides a redox-mediated electrodialysis multi-channel membrane module system for wastewater treatment and resource recycling, characterized by a cell structure in which redox channels are disposed adjacent to both electrodes and driven by being interconnected through electrochemical reactions of redox materials. Inside the cell structure, at least one or more bipolar membranes, anion exchange membranes, and cation exchange membranes are spaced apart to separate into at least one or more diluted channels and concentrated channels. When voltage is applied, wastewater generated from secondary battery manufacturing processes or metal recovery processes flowing into the diluted channels is ion-separated, and each separated ion combines with ions generated from water splitting at the bipolar membrane to be concentrated in the concentrated channels. Sodium sulfate (Na₂SO₄) waste liquid, which is wastewater generated during secondary battery manufacturing and metal recovery processes flowing into the diluted channels, is separated and removed, and NaOH and H₂SO₄ are concentrated and recovered in the concentrated channels. By utilizing redox reactions and ion exchange membranes, energy consumption is low and ion separation speed is very fast, and using bipolar membranes enables recycling of acids and bases and selective separation/concentration/recovery.

A preferred first embodiment of the present invention provides a redox-mediated electrodialysis multi-channel membrane module system for wastewater treatment and resource recovery formed as a 5-channel structure consisting of two redox channels, two concentrated channels, and one diluted channel. Bipolar membranes (BPMs) are respectively disposed of both inner sides of the redox channels disposed of adjacent to both electrodes, and an anion exchange membrane (AEM) and a cation exchange membrane (CEM) are sequentially spaced from one of the bipolar membranes to separate sections.

A preferred second embodiment of the present invention provides a redox-mediated electrodialysis multi-channel membrane module system for wastewater treatment and resource recovery formed as a 5-channel structure consisting of two redox channels, two concentrated channels, and one diluted channel. Cation exchange membranes (CEMs) are respectively disposed on both inner sides of the redox channels disposed of adjacent to both electrodes, and an anion exchange membrane (AEM) and a bipolar membrane (BPM) are spaced between one cation exchange membrane and the corresponding other cation exchange membrane to separate sections. In the multi-channel membrane module system, one of the cation exchange membranes is a monovalent selective exchange membrane.

A preferred third embodiment of the present invention provides a redox-mediated electrodialysis multi-channel membrane module system for wastewater treatment and resource recovery formed as a 6-channel structure consisting of two redox channels, two concentrated channels, and two diluted channels. One bipolar membrane (BPM) is placed in the center of the cell, and anion exchange membranes (AEM) and cation exchange membranes (CEM) are alternately spaced in left and right directions from the central bipolar membrane.

Furthermore, for large-scale wastewater treatment, when the cell structure is a single unit, at least two or more cell structures can be stacked and arranged. By fabricating a stack-type module in which multiple porous carbon electrodes are stacked between each electrode and the redox channels, the use of ion exchange membranes can be minimized, enabling large-scale capacity while reducing system manufacturing costs.

Additionally, the present invention provides an energy reuse system comprising a resource recovery module comprising the above-described redox-mediated electrodialysis multi-channel membrane module for wastewater treatment and resource recovery using redox-mediated electrodialysis system, and an energy recovery module comprising redox channels through which redox materials flow. The resource recovery module and the energy recovery module are connected via the redox channels to allow circulation. When voltage is applied to the resource recovery module, a charging process proceeds, and the electrical energy input during the charging process generates a potential difference in the module and is stored as chemical energy, which is recovered through a discharging process in the energy recovery module. The resource recovery module and the energy recovery module are connected by redox channels made of redox materials using the same redox pair.

### ADVANTAGEOUS EFFECTS

The redox-mediated electrodialysis multi-channel membrane module system of the present invention is energy-efficient as wastewater treatment can proceed with low energy consumption compared to conventional processes through a bipolar membrane electrodialysis performed at low temperature and pressure.

It is an environmentally friendly process with very little wastewater generation as it enables treatment and resource recovery of Na₂SO₄ waste liquid generated during secondary battery manufacturing and metal recovery processes without large amounts of compounds.

Through the redox-mediated electrodialysis multi-channel membrane module system of the present invention, ions can be selectively separated using redox reactions and ion exchange membranes, and ion concentration rate and speed are improved more than twice compared to conventional processes.

Therefore, energy consumption is low and ion separation speed is very fast, and utilizing a bipolar membrane enables the recycling and selective separation/concentration/recovery of acids and bases.

Additionally, the process enables the recovery of high-purity acids and bases with a purity exceeding 90% recovered during the Na₂SO₄ waste liquid treatment process. This can increase the added value of waste lithium battery black powder and can be utilized as raw materials for black powder hydrometallurgical treatment processes, creating a new market for waste lithium battery resource utilization.

Furthermore, the present invention enables large-scale modules through stacking porous carbon electrodes suitable for redox reactions instead of stacking expensive bipolar membranes and ion exchange membranes. This minimizes the use of ion exchange membranes, simplifies processes, reduces system manufacturing costs, and enables scale-up for commercialization.

### BRIEF DESCRIPTION OF THE DRAWINGS

**FIG. 1** is a first embodiment of the redox-mediated electrodialysis multi-channel membrane module system of the present invention,
**FIG. 2** shows the average current density value according to the first embodiment,
**FIG. 3** shows the sodium sulfate removal rate according to the first embodiment,
**FIG. 4** shows pH change values confirmed in each concentrated channel at the initial operation and after 2 hours of the first embodiment,
**FIG. 5** is a second embodiment of the redox-mediated electrodialysis multi-channel membrane module system of the present invention,
**FIG. 6** shows the average current density value according to the second embodiment,
**FIG. 7** shows the sodium sulfate removal rate according to the second embodiment,
**FIG. 8** shows pH change values confirmed in each concentrated channel at the initial operation and after 2 hours of the second embodiment,
**FIG. 9** is a schematic diagram of a multi-channel membrane module system employing a monovalent selective exchange membrane in the redox-mediated electrodialysis multi-channel membrane module system of the present invention,
**FIG. 10** is a third embodiment of the redox-mediated electrodialysis multi-channel membrane module system of the present invention,
**FIG. 11** shows the average current density value according to the third embodiment,
**FIG. 12** shows the sodium sulfate removal rate according to the third embodiment,
**FIG. 13** shows pH change values confirmed in each concentrated channel at the initial operation and after 2 hours of the third embodiment,
**FIG. 14** is a schematic diagram of the electrode stacking method of the stack-type module of the redox-mediated electrodialysis multi-channel membrane module system of the present invention,
**FIGS. 15** to **17** are photographs of the redox-mediated electrodialysis multi-channel membrane module system including the stack-type module of FIG. 14,
**FIG. 18** is a schematic diagram of an energy reuse system using the redox-mediated electrodialysis multi-channel membrane module system of the present invention,
**FIG. 19** shows a cell structure in which a conventional bipolar membrane electrodialysis (BPED) process is performed.

### DETAILED DESCRIPTION OF THE EMBODIMENTS

Hereinafter, the present invention will be described in detail.

The present invention provides a redox-mediated electrodialysis multi-channel membrane module system for wastewater treatment and resource recycling, characterized by a cell structure in which redox channels are disposed adjacent to both electrodes and driven by being interconnected through electrochemical reactions of redox materials. Inside the cell structure, at least one or more bipolar membranes, anion exchange membranes, and cation exchange membranes are spaced apart to separate into at least one or more diluted channels and concentrated channels. When voltage is applied, wastewater generated from secondary battery manufacturing processes or metal recovery processes flowing into the diluted channels is ion-separated, and each separated ion combines with ions generated from water splitting at the bipolar membrane to be concentrated in the concentrated channels.

The present invention is implemented through a redox-mediated bipolar membrane electrodialysis (RBED) process that combines a redox-mediated electrochemical desalination process with a bipolar membrane electrodialysis (BPED) process, and the main components consist of multi-channels, ion exchange membranes, and bipolar membranes.

The bipolar electrodialysis (BPED) process is a process that introduces bipolar membranes (BPM), which can split water to generate hydrogen ions (H⁺) and hydroxide ions (OH⁻), into the desalination electrodialysis process composed of cation/anion exchange membranes. The bipolar membrane is a new type of membrane that combines cation/anion exchange membranes and has the function of promoting water splitting reactions by catalytic reactions under an electric field to generate H⁺ and OH⁻.

At this time, the bipolar membrane used in the present invention can be a commercial or known membrane and is generally manufactured by bonding polymer cation/anion membranes with a transition layer gap of about 4-5 nm between the cation/anion exchange membranes where water splitting occurs.

The redox-mediated bipolar membrane electrodialysis (RBED) process of the present invention enables continuous separation and removal of dissolved ions through oxidation/reduction reactions of redox materials on the electrode surface (maximum operating potential, V_{cell} ≤ 1.23V) instead of the water splitting reaction (minimum operating potential, V_{cell} = 1.23V) performed on the electrode surface in the conventional bipolar membrane electrodialysis (BPED) process.

Therefore, through the redox-mediated electrodialysis multi-channel membrane module system for wastewater treatment and resource recovery of the present invention, sodium sulfate (Na₂SO₄) waste liquid, which is wastewater generated during secondary battery manufacturing and metal recovery processes flowing into the diluted channels, is separated and removed, and by utilizing hydrogen ions (H⁺) and hydroxide ions (OH⁻) generated from water splitting at the bipolar membrane, sulfuric acid (H₂SO₄) and sodium hydroxide (NaOH) are concentrated in the concentrated channels, providing a process that can recover resources simultaneously with the desalination process in an energy-efficient manner.

That is, the present invention is a high-efficiency and high-performance process with low energy consumption, very fast ion separation speed using redox reactions and ion exchange membranes, and capable of recycling acids and bases and selective separation/concentration/recovery using bipolar membranes.

Furthermore, in the embodiments of the present invention, sodium sulfate (Na₂SO₄) is specifically described as an example of wastewater, but is not limited thereto, and ionic substances present in wastewater can be concentrated and recovered as specific substances through H⁺ and OH⁻ generation using bipolar membranes.

As examples, LiOH recovery from lithium wastewater, ammonia recovery from ammonium wastewater, CO₂ capture dissolved in seawater, boron removal and concentration in seawater, HCl and NaOH production from seawater (NaCl), heavy metal removal during refining processes, organic acid recovery from industrial and food wastewater, etc., can be applied to remove, concentrate, and recover various substances based on acids and bases.

In the redox-mediated electrodialysis multi-channel membrane module system, redox materials can be used without limitation as long as they are materials in which oxidation-reduction reactions occur reversibly using the same redox pair. Examples include I₃⁻/I⁻, [Fe (CN)₆]³⁻/[Fe (CN)_{6]}⁴⁻, Zn²⁺/Zn, MVCl₂/MV, etc. In the embodiments of the present invention, Na₄Fe(CN)₆ is used as a preferred example but is not limited thereto.

The Na₄Fe(CN)₆ redox material undergoes reversible oxidation-reduction reactions as shown in Reaction Equation 1 below.

Reaction Equation 1: Fe (CN)₆³⁻ + e⁻ ↔ Fe (CN)₆⁴⁻

The oxidation-reduction materials of the redox couple accelerate ion separation while reacting at the electrode.

Additionally, the separated cations and anions can be selectively permeated through cation exchange membranes (CEM) and anion exchange membranes (AEM), respectively.

The cation exchange membranes and anion exchange membranes can be microporous insulating separators and ion exchange (conductive) membranes. Cation exchange membranes and anion exchange membranes are installed for electrophysical separation, where microporous insulating separators allow only ion movement, and ion exchange (conductive) membranes can selectively move only cations or anions.

The ion exchange membranes and electrodes used in the present invention can be any of those that have been used in conventional batteries, accumulators, etc., and can be appropriately selected and used by those skilled in the art according to their purpose and conditions of use.

### Mode for Carrying Out the Invention

A preferred first embodiment of the redox-mediated electrodialysis multi-channel membrane module system of the present invention provides a multi-channel membrane module system formed as a 5-channel structure consisting of two redox channels (RC), two concentrated channels (CC1, CC2), and one diluted channel (DC), wherein bipolar membranes (BPMs) are respectively disposed on inner sides of the redox channels disposed adjacent to both electrodes, and an anion exchange membrane (AEM) and a cation exchange membrane (CEM) are spaced apart from any one of the bipolar membranes to partition sections.

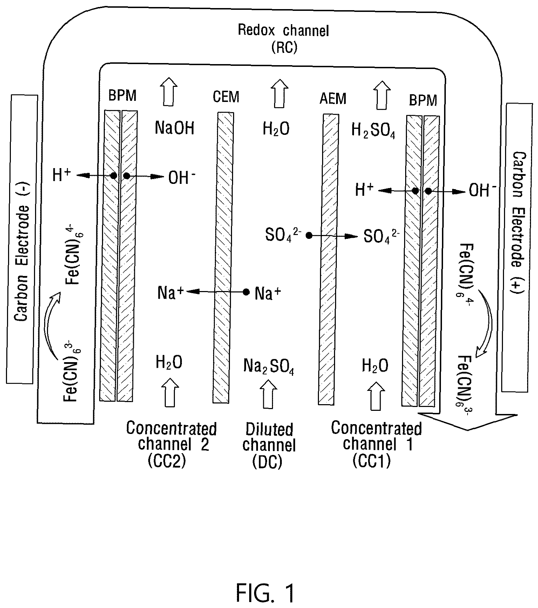

FIG. 1 shows a first embodiment of the redox-mediated electrodialysis multi-channel membrane module system for wastewater treatment and resource recovery of the present invention.

Specifically, it consists of two bipolar membranes and one each of anion/cation exchange membranes, showing a 5-channel module consisting of two redox channels (channels 1 and 5 from the left, RC), two concentrated channels (channels 2 and 4, CC1, CC2), and one diluted channel (channel 3, DC).

At this time, the cation exchange membrane disposed on one side of the diluted channel and the anion exchange membrane disposed on the other side of the diluted channel facilitate the separation of specific ions and prevent contamination of the diluted channel and concentrated channel.

When voltage is applied to the system, Na₂SO₄ wastewater introduced into the diluted channel is separated into Na⁺ and SO₄²⁻ ions, thereby removing Na₂SO₄. The separated Na⁺ and SO₄²⁻ ions migrate to the adjacent concentrated channels, while H⁺ and OH⁻ ions, generated via a water-splitting reaction at the bipolar membranes in contact with the redox channels, combine with the SO₄²⁻ and Na⁺ ions in the respective concentrated channels to concentrate H₂SO₄ and NaOH.

The redox-mediated electrodialysis multi-channel membrane module system of the present invention is configured to induce water splitting even at low voltages using bipolar membranes, thereby enabling the generation of acids and bases. Accordingly, it can provide a sodium sulfate (Na₂SO₄) reuse module capable of energy-efficient operation at low voltage.

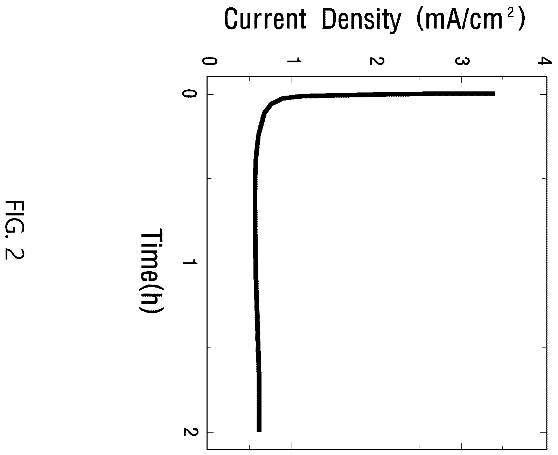

**FIGS. 2** to **4** show the experimental results regarding sodium sulfate removal and the recovery of sulfuric acid and sodium hydroxide using the multi-channel membrane module system for wastewater treatment and resource recycling according to the first embodiment.

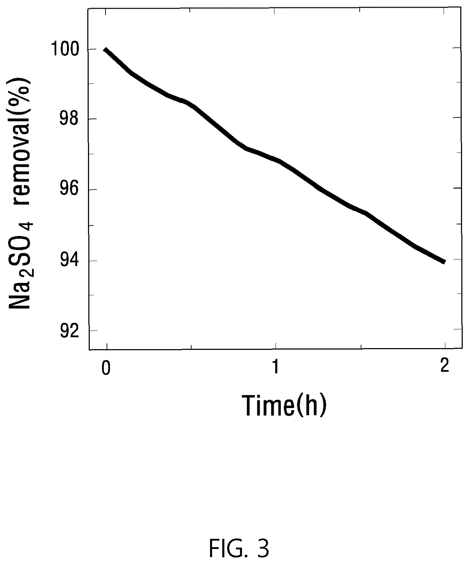

From the results shown in FIGS. 2 and 3, it was confirmed that an average current density of 0.6 mA/cm² flowed in the multi-channel membrane module system of the first embodiment, achieving a 6% sodium sulfate removal rate over 2 hours.

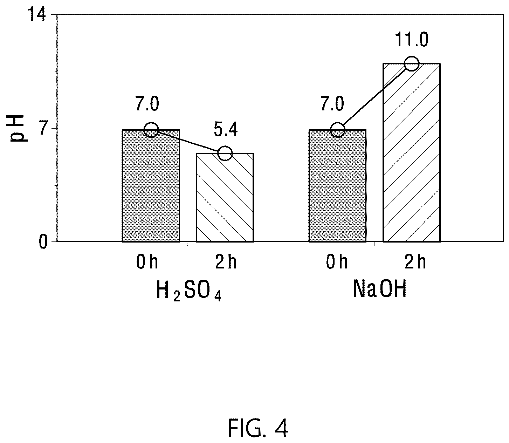

In addition, Figure 4 shows the pH change values observed in each concentration channel during the initial operation and after 2 hours of the multi-channel membrane module system in the first embodiment. In the H₂SO₄ concentration channel, the initial pH of 7.0 changed to 5.4 after 2 hours. This result confirms that H⁺ was generated in the bipolar membrane, and H₂SO₄ was produced as SO₄²⁻ migrated from the diluted channel to the concentration channel. Conversely, in the NaOH concentration channel, the initial pH of 7.0 changed to 11.0 after 2 hours of operation of the multi-channel membrane module system. This indicates that OH⁻ was generated at the bipolar membrane and Na⁺ migrated from the diluted channel to the concentration channel, leading to the formation of NaOH.

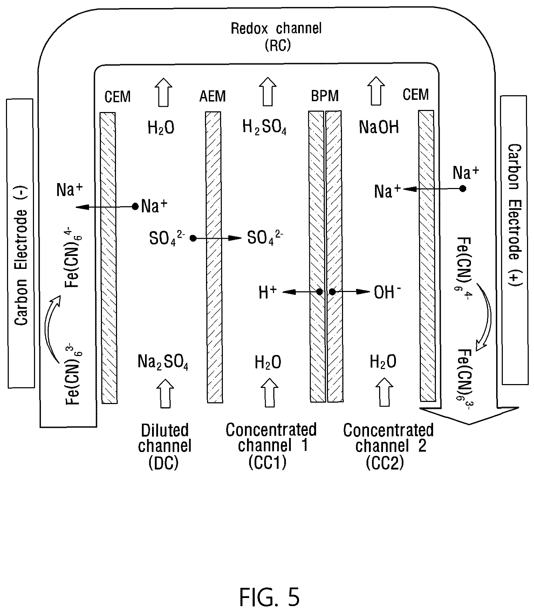

**FIG. 5** shows a second embodiment of the redox-mediated electrodialysis multi-channel membrane module system for wastewater treatment and resource recovery of the present invention. This embodiment provides a multi-channel membrane module system formed as a 5-channel structure consisting of two redox channels (RC), two concentrated channels (CC1, CC2), and one diluted channel (DC), wherein cation exchange membranes (CEMs) are respectively disposed on the inner sides of the redox channels adjacent to both electrodes, and an anion exchange membrane (AEM) and a bipolar membrane (BPM) are spaced apart between one cation exchange membrane and the corresponding other cation exchange membrane to partition the sections.

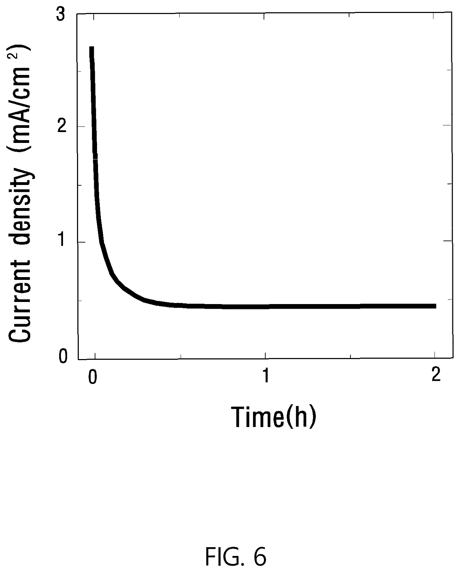

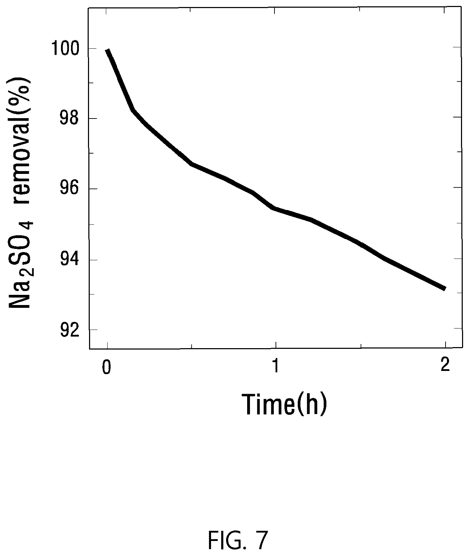

**FIGS. 6** to **8** show the performance results of the second embodiment of the redox-mediated electrodialysis multi-channel membrane module system for wastewater treatment and resource recycling according to the present invention. As shown in FIGS. 6 and 7, an average current density of 0.5 mA/cm² was observed, and a sodium sulfate (Na₂SO₄) removal rate of 7% was confirmed over 2 hours.

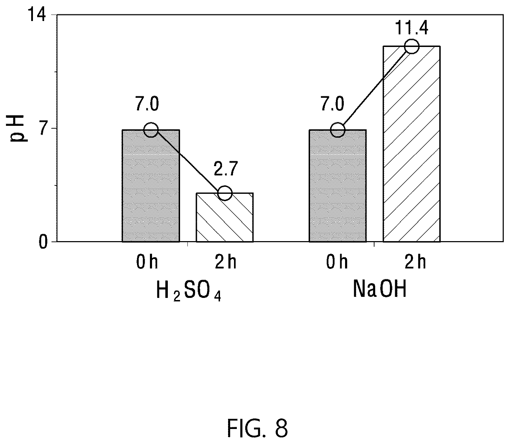

FIG. 8 also shows the pH change values observed in each concentrated channel at the initial stage and after 2 hours of operation of the multi-channel membrane module system. In the H₂SO₄ concentrated channel, the initial pH changed from 7.0 to 2.7 after 2 hours. This result confirms that H⁺ was generated in the bipolar membrane, and H₂SO₄ was produced as SO₄²⁻ migrated from the diluted channel to the concentration channel.

On the other hand, in the NaOH concentrated channel, the initial pH changed from 7.0 to 11.4 after 2 hours of operation of the multi-channel membrane module system. This indicates that OH⁻ was generated at the bipolar membrane and Na⁺ migrated from the diluted channel to the concentration channel, leading to the formation of NaOH.

These results confirm that high efficiency is achieved due to the lowest system resistance, as only a single bipolar membrane is used in the multi-channel membrane module system, which is configured with 5 channels.

Furthermore, in the multi-channel membrane module system of the present invention, a cation exchange membrane is disposed on each of the inner surfaces of the redox channel, and the cell structure, wherein an anion exchange membrane and a bipolar membrane are sequentially spaced apart from either one of the cation exchange membranes, can prevent the adsorption of negatively charged redox substances, such as Fe(CN)₆³⁻/Fe(CN)₆⁴⁻, which carry negative charges, from adsorbing onto the anion exchange membrane side of the anion exchange membrane and bipolar membrane. Since negatively charged, fixed functional groups are bonded to the surface of the exchange membrane, negatively charged redox materials are not adsorbed. Therefore, this configuration is advantageous as it allows for a stable desalination process to be performed over a long period.

The redox-mediated electrodialysis multi-channel membrane module system of the present invention is configured to induce water splitting even at low voltage using bipolar membranes to generate acids and bases. Consequently, it provides a sodium sulfate (Na₂SO₄) reuse module capable of energy-efficient operation at low voltages.

Since high efficiency is achieved with the 5-channel cell structure utilizing only a single bipolar membrane as described above, the sodium sulfate removal rate can be further improved by arranging the cell structures in a stack of at least two or more units, and more preferably 2 to 10 units, when defining the cell structure as a single unit.

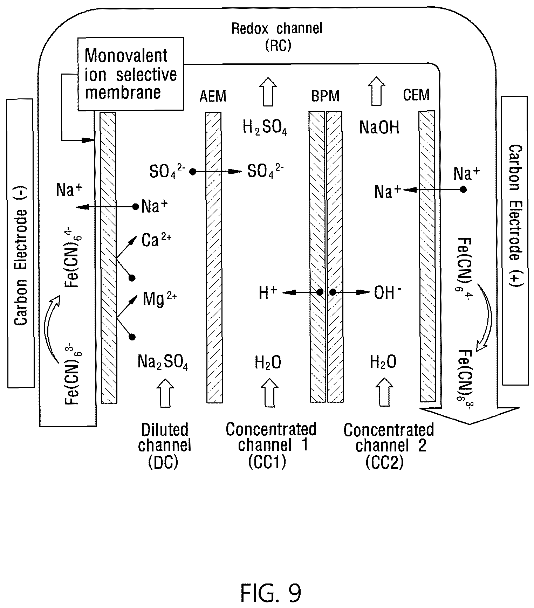

**FIG. 9** shows a schematic diagram of a multi-channel membrane module system employing a monovalent selective cation exchange membrane in the redox-mediated electrodialysis multi-channel membrane module system of the present invention.

By placing a monovalent cation-selective exchange membrane between the redox channel and the diluted channel, only monovalent cations are selectively allowed to pass through when both monovalent and multivalent cations are present in the influent. This inhibits the passage of multivalent ions, preventing scale formation caused by multivalent ions, particularly hardness minerals.

Specifically, the multi-channel membrane module system using a monovalent selective cation exchange membrane shown in FIG. 9 is a separated 5-channel module system using one bipolar membrane, one anion exchange membrane, one cation exchange membrane, and one monovalent selective cation exchange membrane.

In this case, if substances other than sodium sulfate (Na₂SO₄) enter the diluted channel, such as magnesium ions (Mg²⁺) and calcium ions (Ca²⁺), the monovalent cations (Na⁺) move through the monovalent cation-selective membrane into the redox channel. The divalent cations are restricted from moving between channels, preventing electrode scaling and enabling salt removal without pretreatment.

In addition, a preferred third embodiment provides a redox-mediated electrodialysis multi-channel membrane module system for wastewater treatment and resource recycling formed as a 6-channel structure consisting of two redox channels, two concentrated channels, and two diluted channels. wherein a single bipolar membrane is disposed at the center of the cell, and anion exchange membranes and cation exchange membranes are alternately spaced apart in left and right directions from the central bipolar membrane.

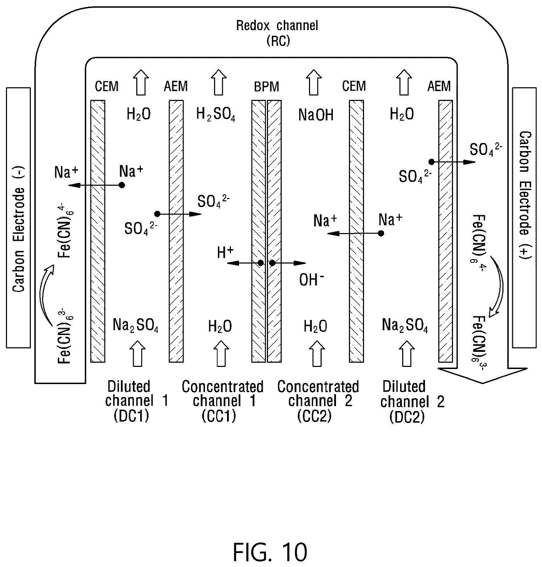

Specifically, FIG. 10 illustrates a third embodiment of the redox-mediated electrodialysis multi-channel membrane module system for wastewater treatment and resource recycling according to the present invention. This is a 6-channel module system separated using one bipolar membrane and two sheets each of anion and cation exchange membranes.
Although the mechanism for generating H₂SO₄ and NaOH in each concentrated channel is the same, this configuration uses only a single bipolar membrane in the center to form two redox channels (Channels 1 and 6 from the left), two concentrated channels (Channels 3 and 4), and two diluted channels (Channels 2 and 5). Through this modular system, Na₂SO₄ is removed in the two diluted channels, while H₂SO₄ and NaOH are concentrated in the two concentration channels, respectively.

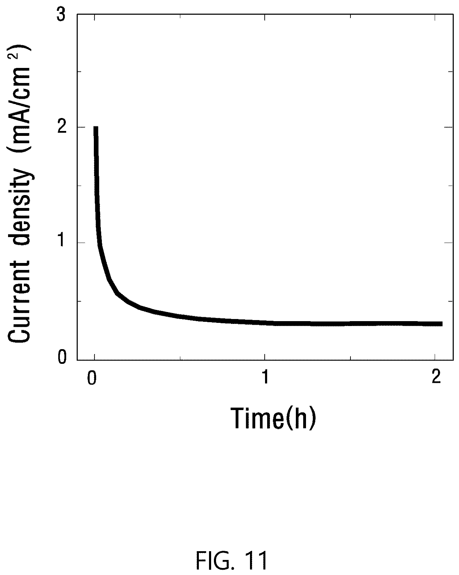

**FIGS. 11** to **13** show the experimental results regarding sodium sulfate removal and the recovery of sulfuric acid and sodium hydroxide according to the redox-mediated electrodialysis multi-channel membrane module system of the third embodiment example (6-channel configuration).

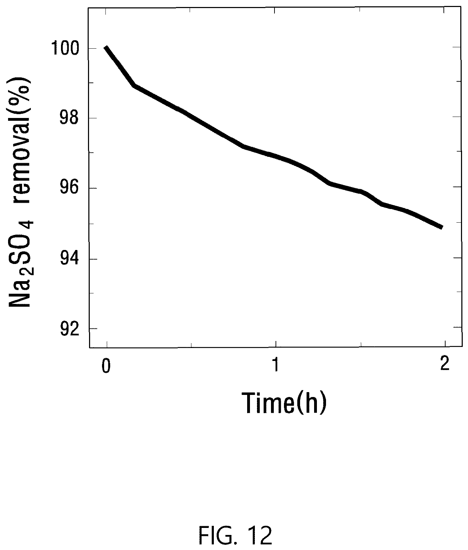

From the results shown in FIGS. 11 and 12, an average current density of 0.4 mA/cm² flowed in the multi-channel membrane module system of the third embodiment, and a sodium sulfate removal rate of 5% was achieved over 2 hours.

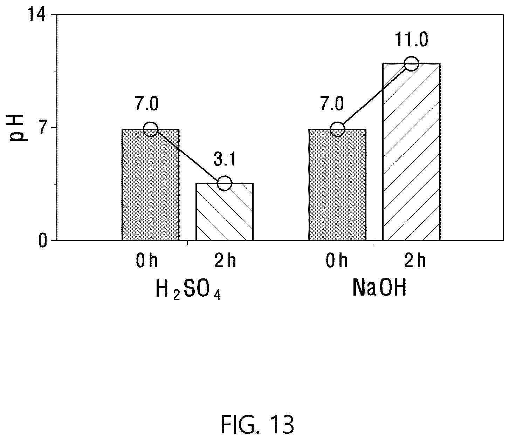

Furthermore, the pH change values observed in each concentrated channel of the multi-channel membrane module system of the third embodiment at the start of operation and after 2 hours, as shown in Figure 13, are as follows: In the H₂SO₄ concentrated channel, the initial pH of 7.0 changed to 3.1 after 2 hours. In the NaOH concentrated channel, the initial pH of 7.0 changed to 11.0 after 2 hours of operation. At this time, the mechanisms for generating H₂SO₄ and NaOH in each concentrated channel are identical to those in the system of the first embodiment.

Based on the above, the redox-mediated electrodialysis multi-channel membrane module system for wastewater treatment and resource recycling according to the present invention operates at a low potential through a redox reaction with a low operating potential instead of the water-splitting reaction of conventional electrodialysis. This enables high-efficiency desalination and resource recycling, thereby possessing high energy efficiency. Consequently, it achieves an energy savings effect of over 50% compared to conventional electrodialysis processes.

Specifically, it utilizes the energy storage principle of the redox materials employed to enable desalination and resource recycling, allowing recovery of the energy used for these processes. Therefore, this energy recovery process is a characteristic feature of the redox flow method of the present invention, arising from the electrochemical reaction of the redox materials, and represents a feature not introduced in conventional water reuse processes.

Furthermore, to achieve large-scale wastewater treatment, the present invention manufactures the redox channel as a stack-type module by multilayering porous carbon electrodes between each electrode. This minimizes the use of ion exchange membranes, enabling large-scale operation while reducing system manufacturing costs.

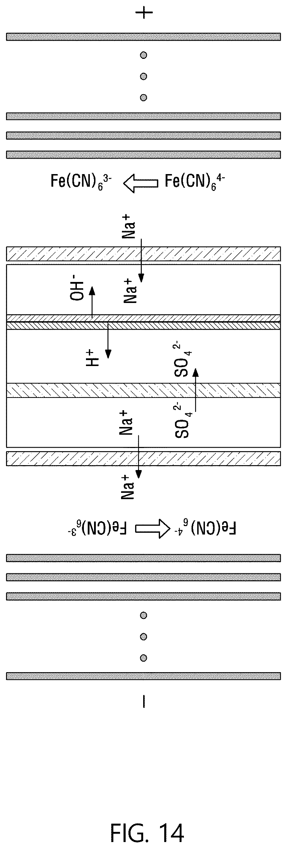

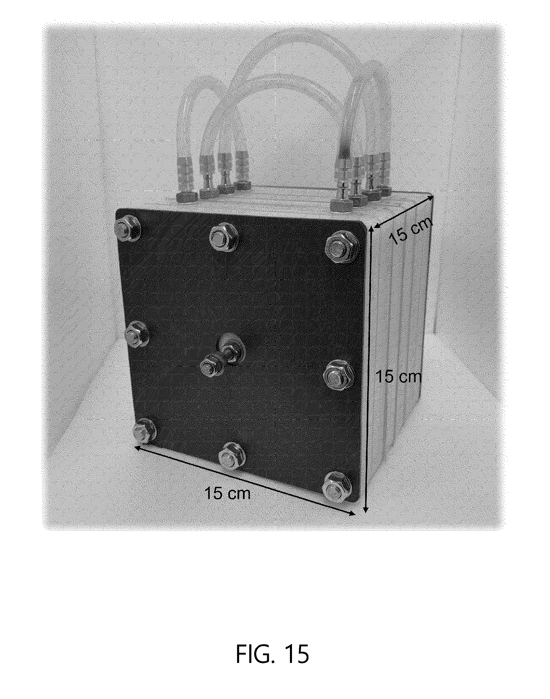

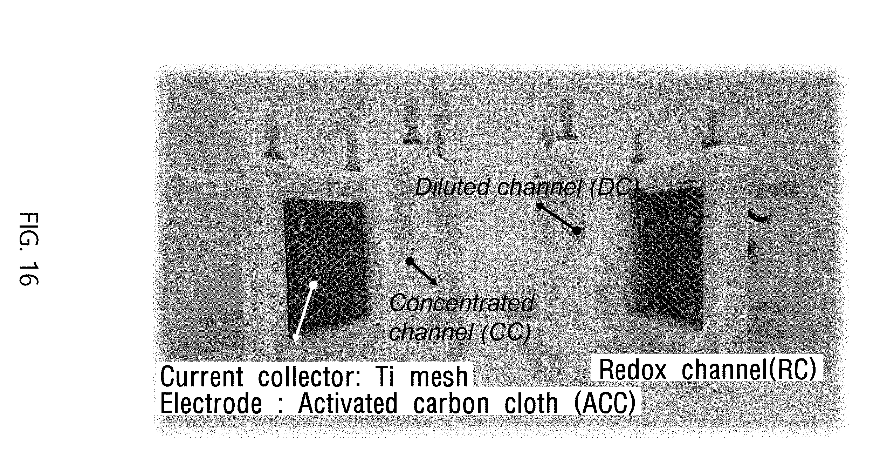

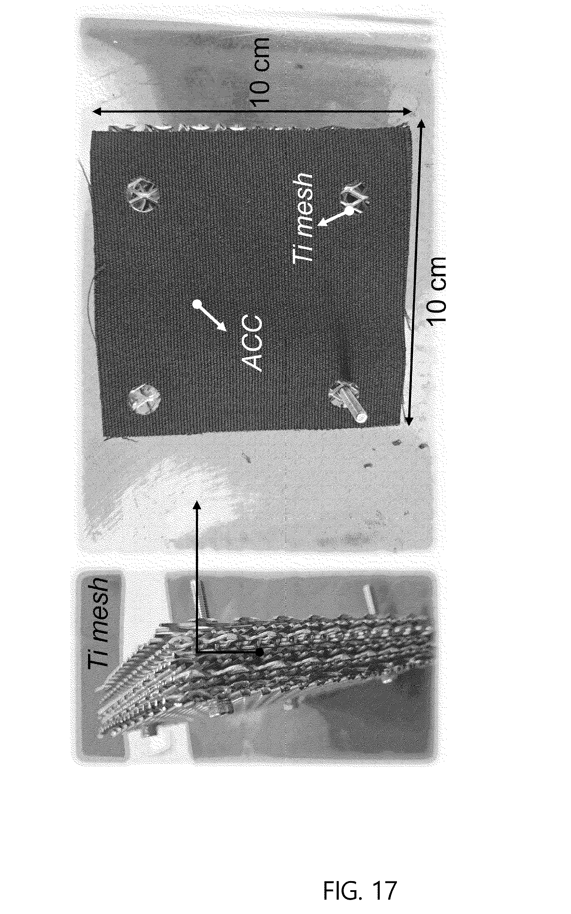

**FIG. 14** is a schematic diagram of the electrode stacking method for the stack-type module of the redox-mediated electrodialysis multi-channel membrane used for wastewater treatment and resource recycling of the present invention. **FIGS. 15** to **17** show photographs of the multi-channel membrane module including said stack-type module.

The electrode stacking structure increases treatment capacity and enhances ion separation efficiency by stacking inexpensive porous carbon electrodes in the redox channels instead of stacking expensive bipolar membranes and ion exchange membranes. Therefore, through the electrode stacking method of the stack-type module of the multi-channel membrane, it is possible to remove Na₂SO₄ and recover high-purity acids and bases with a purity of 90% or higher.

Accordingly, through the electrode stacking strategy of the stack-type module shown in FIG. 14, an economical and convenient system can be constructed during scale-up.

In addition, the redox-mediated electrodialysis multi-channel membrane module system of the present invention utilizes porous carbon electrodes under mild electrochemical reaction conditions for redox materials. This provides high price competitiveness compared to conventional electrodialysis processes that employ expensive metal and metal oxide electrodes. Furthermore, by minimizing the number of ion exchange membranes through scale-up via electrode stacking in the process design, process capital costs and operating costs can be reduced by more than 40%.

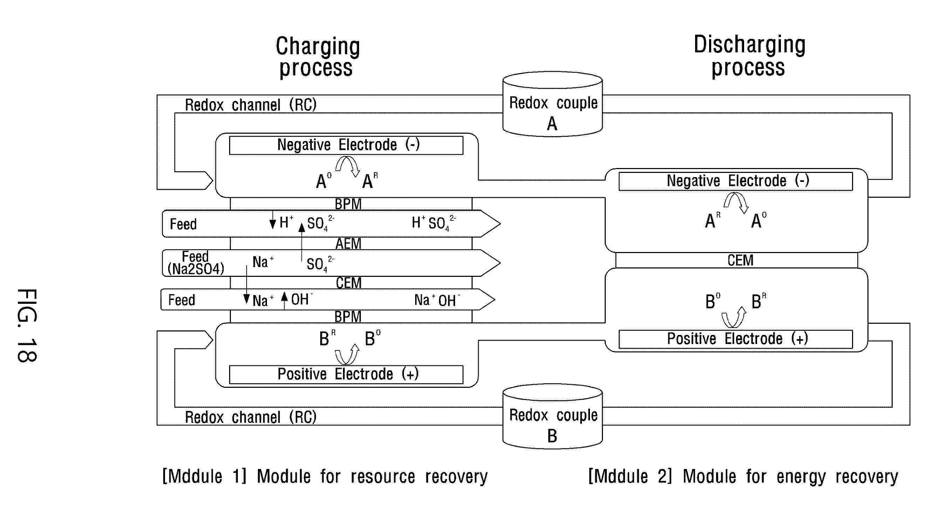

**FIG. 18** is a schematic diagram of an energy reuse system using the redox-mediated electrodialysis multi-channel membrane module for wastewater treatment and resource recycling according to the present invention. It comprises two modules: a resource recovery module (Module 1) consisting of the redox-based electrodialysis multi-channel membrane module for wastewater treatment and resource circulation, and an energy recovery module (Module 2) composed of a redox channel through which redox materials flow. These modules are connected via redox materials.

Specifically, in FIG. 18, the resource recovery module (Module 1) is a module comprising the redox-based electrodialysis multi-channel membrane module for wastewater treatment and resource recycling as described above, which separates and removes sodium sulfate from the feed water and concentrates acids and bases to recover resources. It is composed of diluted channels, concentrated channels, and redox channels.

In FIG. 18, the energy recovery module (Module 2) is a module that converts and recovers the input of electrical energy into chemical energy when electricity is applied (charging) to the resource recovery module (Module 1) and consists only of redox channels through which redox materials flow.

That is, current collectors and electrodes are attached to the redox channels of the resource recovery module (Module 1) and the energy recovery module (Module 2) to induce oxidation-reduction of the redox materials. At this time, the redox couples in each redox channel generate a potential difference in the cell through different oxidation-reduction reactions.

The operating principle of the system shown in FIG. 18 is as follows: when voltage is applied to the resource recovery module (Module 1), a charging process begins, and cations in the feed water migrate toward the cathode while anions migrate toward the anode. The electrical energy input during this charging process generates a potential difference through the oxidation-reduction of the redox materials and can be stored as chemical energy, which is then recovered through a discharging process in the energy recovery module (Module 2).

Specifically, when a potential difference develops in the module during charging, a reverse redox reaction occurs during discharging, producing energy through spontaneous electron transfer.

Although the present invention has been described in detail with reference to the specific examples provided above, it is evident to those skilled in the art that various modifications and alterations are possible within the scope of the technical concept of the invention. It is understood that such modifications and alterations fall within the scope of the appended claims.

## Claims

1. A redox-mediated electrodialysis multi-channel membrane module system for wastewater treatment and resource recycling, comprising:
a cell structure in which redox channels are disposed adjacent to both electrodes and driven by being interconnected through electrochemical reactions of redox materials,
at least one or more bipolar membranes, anion exchange membranes, and cation exchange membranes spaced inside the cell structure to separate into at least one or more diluted channels and concentrated channels, and
when voltage is applied, wastewater generated from secondary battery manufacturing processes or metal recovery processes flowing into the diluted channels is ion-separated, and each separated ion combines with ions generated from water splitting at the bipolar membrane to be concentrated in the concentrated channels.

2. The redox-mediated electrodialysis multi-channel membrane module system of claim 1, wherein the wastewater flowing into the diluted channels is sodium sulfate (Na₂SO₄) waste liquid.

3. The redox-mediated electrodialysis multi-channel membrane module system of claim 1, wherein sodium hydroxide (NaOH) and sulfuric acid (H₂SO₄) are concentrated and recovered in the concentrated channels.

4. The redox-mediated electrodialysis multi-channel membrane module system of claim 1, wherein the multi-channel membrane module system is formed as a 5-channel structure consisting of two redox channels, two concentrated channels, and one diluted channel, **characterized in that** bipolar membranes (BPMs) are respectively disposed on inner sides of the redox channels disposed adjacent to both electrodes, and an anion exchange membrane (AEM) and a cation exchange membrane (CEM) are sequentially spaced apart from any one of the bipolar membranes to partition sections.

5. The redox-mediated electrodialysis multi-channel membrane module system of claim 1, wherein the multi-channel membrane module system is formed as a 5-channel structure consisting of two redox channels, two concentrated channels, and one diluted channel; **characterized in that** cation exchange membranes (CEMs) are respectively disposed on the inner sides of the redox channels adjacent to the both electrodes; and an anion exchange membrane (AEM) and a bipolar membrane (BPM) are spaced apart to partition the cell into sections between one of the cation exchange membranes and the corresponding other cation exchange membrane.

6. The redox-mediated electrodialysis multi-channel membrane module system of claim 1, wherein the multi-channel membrane module system is formed as a 6-channel structure consisting of two redox channels, two concentrated channels, and two diluted channels; **characterized in that** a single bipolar membrane (BPM) is disposed at the center of the cell; and an anion exchange membrane (AEM) and a cation exchange membrane (CEM) respectively are disposed spaced apart in left and right directions from the central bipolar membrane.

7. The redox-mediated electrodialysis multi-channel membrane module system of claim 1, wherein, defining the cell structure as a single unit, at least two or more of said cell structures are arranged in a stack.

8. The multi-channel membrane module system of Claim 5, wherein one of the cation exchange membranes is a monovalent selective cation exchange membrane.

9. The redox-mediated electrodialysis multi-channel membrane module system of claim 1, wherein the redox channel is configured as a stack-type module in which porous carbon electrodes are stacked in multiple layers adjacent to each electrode.

10. An energy reuse system comprising:
a resource recovery module comprising the redox-mediated electrodialysis multi-channel membrane module system for wastewater treatment and resource recycling of any one of claims 1 to 9, and
an energy recovery module comprising redox channels through which redox materials flow, wherein the resource recovery module and the energy recovery module are connected via the redox channels to allow circulation of the redox materials,
wherein, upon application of voltage to the resource recovery module, a charging process proceeds, and electrical energy input during the charging process generates a potential difference in the module to be stored as chemical energy; and
wherein the chemical energy is recovered as electrical energy through a discharging process in the energy recovery module.

11. The energy reuse system of claim 10, wherein the resource recovery module and the energy recovery module are connected by redox channels made of redox materials using the same redox pair.
